# EUROPÄISCHE PATENTSCHRIFT

(11) **EP 0 525 135 B1**
(45) Veröffentlichungstag und Bekanntmachung des Hinweises auf die Patenterteilung: **28.06.1995**
(21) Anmeldenummer: 92903062.5
(22) Anmeldetag: 04.02.1992
(51) Int. Cl.: B01J 2/22, B30B 11/16, B30B 11/18, A61J 3/10

(54) **VORRICHTUNG ZUM KONTINUIERLICHEN MECHANISCHEN UMFORMEN VON TEILCHENFöRMIGEN STOFFEN.**
DEVICE FOR THE CONTINUOUS MECHANICAL SHAPING OF PARTICULATE MATERIALS
DISPOSITIF POUR LE FORMAGE MECANIQUE EN CONTINU DE SUBSTANCES EN FORME DE PARTICULES

(30) Priorität: 11.02.1991 CH 410/91
(43) Veröffentlichungstag der Anmeldung: 03.02.1993
(73) Patentinhaber: GERTEIS, Paul, CH-8645 Jona (CH)
(72) Erfinder: GERTEIS, Paul, CH-8645 Jona (CH)
(74) Vertreter: Herrmann, Peter, Dr. Patentanwalt
(86) Internationale Anmeldenummer: CH9200023
(87) Internationale Veröffentlichungsnummer: WO9213633

(56) Entgegenhaltungen:
- DE-B- 1 029 723
- DE-B- 1 164 989
- DE-B- 1 280 544
- DE-C- 544 184
- DE-C- 633 253
- US-A- 3 601 321

## Beschreibung

Die Erfindung betrifft eine Vorrichtung zum kontinuierlichen, mechanischen Umformen von teilchenförmigen Stoffen.

Unter mechanischem Umformen von Stoffen soll das Pressen von feinen, pulvrigen, staubförmigen Produkten der unterschiedlichsten Körnungen oder Mischungen aus solchen, zu grobstückigen Formlingen in Brikettform oder als endlose bandförmige Presslinge, auch Schülpen genannt, und deren gleichzeitige Zerkleinerung zu einem freifliessenden Granulat verstanden werden.

Die US-A-3 601 321 beschreibt ein kontinuierliches Verfahren, bei dem teilchenförmige Stoffe in einem Walzenpaar kompaktiert werden. Die entstandenen Schülpen werden anschliessend mit einem Flügelrotor vorgebrochen und mit einer Hammermühle fertig zerkleinert. Nach der Hammermühle muss bei diesem Verfahren mit einer Siebmaschine fraktioniert werden. Bei diesem Verfahren wird bekannterweise ein grosser Anteil an Unterkorn und Überkorn erzeugt. Das Verfahren umfasst mehrere verschiedene Apparate, was einen enormen Aufwand zur Zerlegung und Reinigung bedeutet. Zur Herstellung pharmazeutischer Produkte mit strikt kontrollierten Arbeitsschritten ist ein solches Verfahren ungeeignet.

Die DE-C- 544 184 beschreibt eine Vorrichtung zum Herstellen von Briketts. Dabei wird zwischen zwei oder mehreren Walzen das Ausgangsmaterial zu Briketts zusammengepresst. Bei mehr als zwei Walzen wirkt die weiter zugeschaltete Walze zusammen mit der Walze, die bei der vorhergehenden Pressung mitgewirkt hat. Auf diese Weise können so viele Walzen zugeschaltet werden, bis gewünschte Kompaktheit und Aussehen erreicht sind. Die auf Kohlebriketts abgestellte Vorrichtung ist für den sterilen Betrieb in einer pharmazeutischen Anlage nicht geeignet

Walzenpressen verschiedener Bauarten verfügen über zwei gegenläufige Walzen, zwischen denen die pulverförmigen Produkte zu Briketts oder Schülpen gepresst werden. Sind Briketts die gewünschte Form des Endprodukts, werden diese vom Feinanteil getrennt und als solche verwendet. Wird ein freifliessendes, körniges Granulat gewünscht, wie es beispielsweise für die Beschickung von Tablettenpressen in der pharmazeutischen Industrie verlangt wird, werden die Schülpen auf verschiedenen, der Walzenpresse nachgeschalteten Aggregaten wie sogenannten Daumenbrechern vorzerkleinert. In einem zusätzlichen Apparat, wie beispielsweise einer Hammermühle oder einer Reibmühle mit rotierenden oder oszillierenden Rotorbewegungen wird durch ein Lochblech oder eine sonstige Siebeinlage passiert und auf diese Weise auf eine nach oben begrenzte Korngrösse zerkleinert.

Die hierbei wieder entstehenden Feinteile müssen vom Gutkorn mittels einer Siebeinrichtung in einem zusätzlichen Arbeitsgang abgetrennt werden. Eine Rückführung dieser Feinanteile in die Aufgabenstation der Walzenpresse ist bei der Verarbeitung von Mischungen unterschiedlicher Komponenten und Mengenanteilen, besonders in der pharmazeutischen Industrie, unerwünscht. Die Gewähr für einwandfreie Zusammensetzung der Endprodukte ist nicht mehr gewährleistet.

Die bekannte Walzenpressen weisen in Bezug auf die Presswalzen zwei grundsätzliche unterschiedliche Anordnungen auf.
1. Die Walzen sind in vertikaler Achse zueinander angeordnet, die Beschickung erfolgt mittels einer in horizontaler Achse liegenden Stopfeinrichtung, meistens in Form von Schneckenförderern.
2. Die Walzen sind nebeneinander auf horizontaler Achse angeordnet, die Stopfeinrichtung liegt in vertikaler Achse dazu, ebenfalls in Form eines Schneckenförderers oder als Aufgabetrichter, die einen direkten Zulauf des Aufgabegutes in die Presszone der Walzenpresse aufgrund der statischen Ueberlagerung ermöglichen soll.

Bei allen bekannten Varianten müssen die Schülpenbänder anschliessend an die Walzenpresse mit einer oder mehreren zusätzlichen Mahl- und Siebeinrichtungen zerkleinert werden. Diese Apparate sind nur mit grossem Aufwand für die Reinigung zerlegbar, was deren Einsatz wesentlich erschwert.

Die Anordnung der Presswalzen übereinander hat den Nachteil, dass durch den Wegfall der Beschickung infolge der Schwerkraft eine wesentlich schlechtere Verteilung der Pulver über die gesamte Breite der Presswalze in Kauf genommen werden muss. Dies hat wiederum zur Folge, dass zwar in der Mitte der Walzen genügend Pulver zugeführt und verpresst wird, die Peripherien der Walzen sind aber meist weniger stark beschickt. Hier kann sich in beiden Randbereichen praktisch keine Schülpe bilden. Das Feingut zusammen mit dem Feinanteil, der sich durch die Zerkleinerung ergibt, muss abgesiebt werden und ist in vielen Fällen als Abfall zu betrachten.

Die Anordnung der Presswalzen nebeneinander hat zwar den Vortei, dass bei leicht fliessenden Gütern die Beschickung über die gesamte Walzenbreite besser gewährleistet ist, hat jedoch den Nachteil, dass das "Durchschiessen" der Feinstteile allein aufgrund der Schwerkraft begünstigt wird. Dies besonders bei jenen Ausführungen von Walzenpressen, die mit einem fest eingestellten Walzenspalt arbeiten. Allein beim Anfahren der Presse, bis sich ein genügend grosser Widerstand zwischen den Presswalzen aufgebaut hat, fliessen grosse Mengen unkomprimiert durch den Spalt in die nachgeschalteten Maschinen. Sobald sich die zugeführte Produktmenge nur geringfügig ändert, bei abnehmenden Vordruck im Dosierbehälter aufgrund des sich reduzierenden Füllgrades ändert sich auch der Grad der Verdichtung und somit die Härte der Briketts, resp. der Schülpen. Nach der Zerkleinerung und Weiterverarbeitung beispielsweise zu Tabletten, ändert sich auch die Härte der Tabletten und damit die Wirkstofffreigabe der Medikamente.

Alle bekannten Walzenpressenausführungen haben einen weiteren wesentlichen Nachteil, die den Einsatz in der pharmazeutischen- und der Lebensmittelindustrie und anderen Anwendungen behindern.

Die Presswalzen dieser Walzenpressen sind aufgrund ihrer Konstruktion beidseitig gelagert und können nur mit immensem Aufwand und durch den Einsatz von geschulten Mechanikern demontiert und gereinigt werden.

Aufgabe der Erfindung ist es, eine Vorrichtung zu schaffen, die in der Lage ist, teilchenförmige Produkte kontinuierlich zu kompaktieren und wirtschaftlich in eine gewünschte Gestalt zu bringen.

Eine weitere Aufgabe ist es, eine Vorrichtung zu schaffen, deren produktberührte Einzelteile einfach demontiert und für die Reinigung gemäss den Vorschriften der pharmazeutischen Industrie in alle Einzelteile zerlegt und auf Sauberkeit allseitig geprüft werden kann.

Die Aufgabe wird erfindungsgemäss dadurch gelöst, dass unterhalb des Presswalzenpaars eine dritte Walze angeordnet ist und das Presswalzenpaar und die Walze senkrecht zur Rotationsachse miteinander und/oder gegeneinander verschiebbar angeordnet sind.

Kompaktieren steht für Brikettieren, Verdichten, Pelletisieren und Granulieren pulverförmiger, körniger, pastöser und aufgeschlämmter Produkte. Unter Reduzieren des Volumens soll auch Zerkleinern sowie die Herstellung einer bestimmten Korngrösse verstanden werden, zu der die kompaktierten Produkte weiter komprimiert bzw. zerkleinert werden.

Eine Zerkleinerung der Art ist auch Mahlen mit anschliessender Klassierung zu verstehen.

Bei der erfindungsgemässen.

Vorrichtung hat sich in überraschender Weise eine Anordnung von drei Walzen erwiesen, wobei in einem geschlossenen Raum unterhalb eines Presswalzenpaares die dritte Walze angeordnet ist.

Es ist zweckmässig, das Presswalzenpaar und die dritte Walze so anzuordnen, dass die Walzen des Presswalzenpaares beweglich gelagert und sowohl gegen das Gehäuse als auch als Ganzes verschiebbar angeordnet ist. Es kann aber auch eine Walze feststehend, die andere gegen diese verschiebbar, in vertikaler und horizontaler Richtung angeordnet sein und die dritte Walze gegen jede Walze des Walzenpaares horizontal und vertikal angeordnet sein. Damit werden Anpassungen an eine Vielzahl von unterschiedlichen Produkten möglich.

Es ist zweckmässig, das Presswalzenpaar in einem Winkel zwischen 0 und 90 Grad aus der Horizontalen kippbar anzuordnen. Das hat den Vorteil, dass das Gut je nach Fliessfähigkeit kontinuierlich befördert werden kann.

Es ist zweckmässig, die Presswalzen und/oder die dritte Walze mit einer aufsteckbaren Kühl- oder Heizeinrichtung zu versehen. Das erlaubt bei Bedarf eine rasche Anpassung an die Verarbeitung eines Produktes mit anderen rheologischen Eigenschaften.

Die Oberfläche der Walzen kann verschiedenartig gestaltet sein. Zur einfacheren Handhabung können profilierte Pressringe auf einem Träger aufgesteckt sein. Bei Verwendung von Pressringen kann deren Austausch ohne Entfernung der Walzenkühlung erfolgen.

Die Oberfläche, insbesondere der dritten Walze resp. der Pressringe, kann mit parallel angeordneten Einfräsungen versehen sein, welche in einem Winkel grösser als 0 und kleiner als 90 Grad, insbesondere zwischen 5 und 45 Grad, bevorzugt zwischen 5 bis 20 Grad, verlaufen.

Die Einfräsungen können aber auch sich kreuzend in einem Winkel, der grösser als 0 Grad und kleiner als 90 Grad ist, verlaufen, wobei ein Verlauf zwischen 1 bis 30 Grad bevorzugt ist.

Die Einfräsungen (Vertiefungen) können somit schräg zur Achse und über Kreuz doppelt ausgeführt verlaufen. Sie können aber auch so ausgebildet sein, dass die Flanken der Einfräsungen, zur Mittelachse gesehen, gleich oder unterschiedlich steile Winkel aufweisen.

Die Einfräsungen können auch unterschiedliche Tiefe aufweisen.

In einer weiteren Variante kann ein mit Stellschrauben stufenlos gegen die Walzenoberfläche einstellbarer Abstreifer vorgesehen sein. Die Abstreifer können zur Vermeidung von Doppelpressungen eventuell klebriger Produkte eingesetzt werden. Der Abstand zwischen der Abstreiferkante und einer Walzenoberfläche ist durch Stellschrauben stufenlos, automatisch so einstellbar, dass bei einer effizienten Abstreifung kein metallischer Kontakt mit der Walzenoberfläche besteht. Es ist vorteilhaft, die Abstreifer so auszuführen, dass sie um 180° drehbar sind. Auch ist es möglich, den Abstreifer so auszubilden, dass er eine Siebeinlage aufnehmen kann.

Die Erfindung soll anhand einer Zeichnung näher beschrieben werden.

Es zeigen:
- Fig. 1: einen Schnitt durch die erfindungsgemässe Vorrichtung
- Fig. 3: einen Schnitt durch eine Walzenkühl-/heizeinheit
- Fig. 3A-D: Oberflächen der Walzen bzw. der auf die Walzenträger aufsteckbaren Pressringe
- Fig. 4: Querschnitt eines Abstreifers

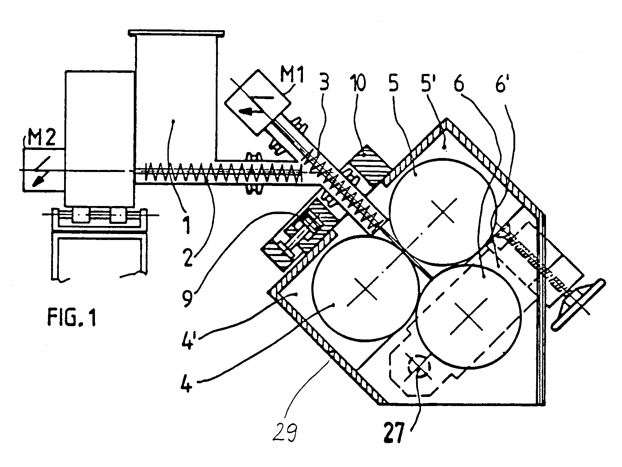

In Fig. 1 ist ein Dosiergerät mit dem Bezugszeichen 1 bezeichnet. Das Dosiergerät 1 ist mit einer regelbaren Dosierschnecke 2 und einer Stopfschnecke 3 verbunden. Ein Pressraum wird zwischen einer Presswalze 4 und einer Presswalze 5 gebildet. Unterhalb des Presswalzenpaares 4,5 befindet sich eine dritte Walze 6. Alle Walzen sind von einem gelagerten Gehäuse 5',5' und von einem Gehäuse 29 umgeben.

Ein Druckzylinder 9 ist auf dem Gehäuse 4' der Walzenlagerung befestigt, der als Hydraulikzylinder ausgebildet sein kann. Der Druckzylinder 9 ist in bekannter Weise über einen Zugbügel 10 mit dem auf einer nicht gezeigten Schwingwippe gelagerten Gehäuse 4', 5' verbunden und in der Lage, die Presswalzen 4, 5 gegeneinander zu verschieben. Je ein Antrieb M1, M2 ist für die Schnecken 2 und 3 vorgesehen.

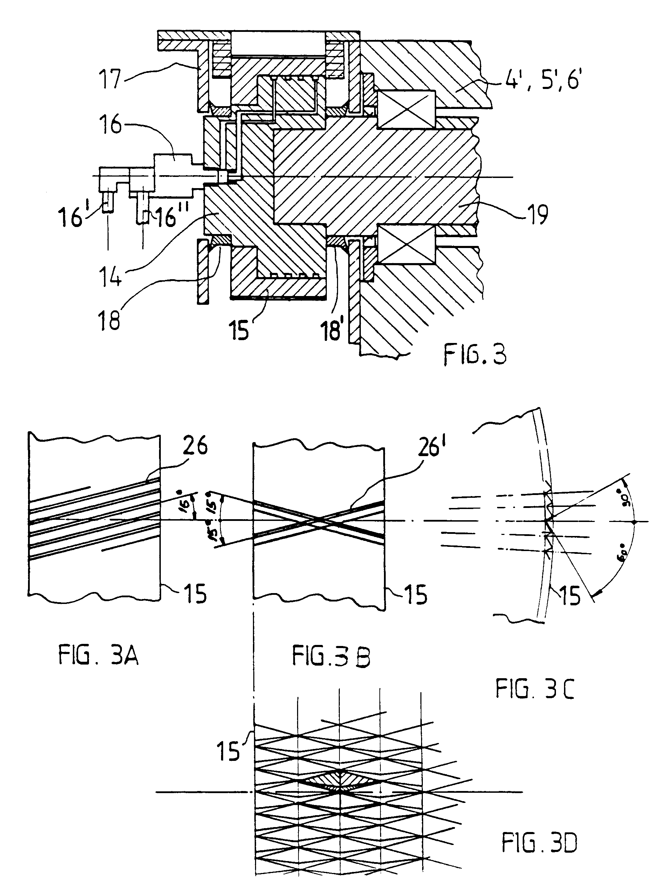

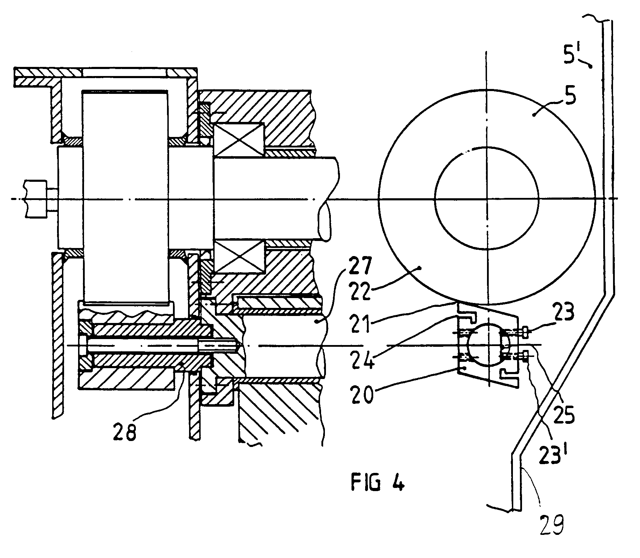

Fig. 3 stellt eine aufsteckbare Kühl-Heizeinheit für die Presswalzen 4, 5 und/oder die Zerkleinerungswalze 6 dar. Diese Einheit besteht aus einem Walzenträger 14, welcher von einem auswechselbaren Pressring 15 umgeben ist. Die Walzenkühlung 16 besteht aus einem Hohlkörper mit einem Anschluss 16' für die Zufuhr und einem Anschluss 16'' für die Abfuhr eines Kühl/Heizmediums. Ein Dichtring 18 ist zwischen einer schwenkbaren Frontwand 17 und dem Walzenträger 14 vorgesehen. Ein weiterer Dichtring 18' ist zwischen dem Walzenträger 14 und der Rückwand des Gehäuses vorgesehen. Die Dichtringe 18,18' gewährleisten einen hermetischen Abschluss zwischen dem produktführenden Raum und den mechanischen Maschinenteilen.

In Fig. 3A ist die Oberfläche des Pressringes 15 mit Einfräsungen 26 versehen, welche parallel in einem Winkel von 15 Grad zur Rotationsachse verlaufen.

Fig. 3B zeigt die Oberfläche des Pressrings 15 mit sich kreuzenden parallel verlaufenden Einfräsungen 26', welche einen Kreuzungswinkel von 15 Grad aufweisen.

Fig. 3 C zeigt die Oberfläche eines Pressringes 15 mit unterschiedlichen Flankenwinkeln.

Fig. 3 D zeigt im Detail die sich bildenden Zähne bei kreuzweiser Anordnung der Einfräsungen 26' bei unterschiedlichen Flankenwinkeln.

Die Oberflächen der Walzen 4,5,6 können gleich gestaltet sein wie diejenigen der austauschbaren Pressringe.

Fig. 4 zeigt wie Fig. 3 einen Teilschnitt durch die Gehäuse 5' und 6' sowie zusätzlich auch die zugehörige Schwingachse 27, die erst eine Verschiebung der Gehäuse gegeneinander erlaubt. In der Verlängerung der Schwingachse 27 ist auf einem Bolzen 28 ein Abstreifer 20 angebracht. Der Abstreifer 20 weist eine Kante 21 auf, welche die Oberfläche der Walze 5 abstreift. Der Abstreifer 20 und die Walze 5 sind von einem Gehäuseteil 29 umschlossen. Der Abstreifer 20 ist mit Stellschrauben 23,23' versehen, die auf eine Anstellfläche 25 wirken. Eine Aussparung 24 ist für die Aufhängung einer Siebeinlage 13 vorgesehen. Der eingestellte Spalt zwischen der Oberfläche der Walze 5 und der Kante 21 des Abstreifers 20 bleibt durch die starre Verbindung der Schwingachse 27 und des Bolzens 28 mit dem Gehäuse 5' konstant, selbst wenn sich das Gehäuse 5' bewegt.

Im Betrieb wird aus dem Dosiergerät 1 Pulver oder eine Mischung verschiedener Pulver mittels der regelbaren Dosierschnecke 2 in die Stopfschnecke 3 gefördert. Die Stopfschnecke 3 übernimmt das Pulver und fördert es in den Pressraum der gegeneinander laufenden Presswalzen 4 und 5. Der Hydraulikzylinder 9 auf dem feststehenden Gehäuse 4' befestigt, ist mit Druck beaufschlagt und zieht über einen, auf der Schwingwippe beweglich gelagerten Gehäuse 5' befestigten Zugbügel 10 die Presswalzen 4 und 5 gegeneinander. Das Pulver wird zwischen den Walzen entlüftet und zu einer Schülpe verpresst.

Unterhalb der beiden Presswalzen 4 und 5 befindet sich eine weitere Walze 6, deren Zweck darin besteht, die geformte Schülpe wieder zu zerkleinern.

Während die Presswalzen 4 und 5 mit gleicher Drehzahl synchron laufen, wird die Drehzahl der Walze 6 unterschiedlich zu jener der Walze 4 gefahren, d.h. es wird eine Friktion eingestellt Aufgrund der schrägen Anordnung der Presswalzen 4 und 5 wird die dazwischen geformte Schülpe automatisch vom nächsten Walzenpaar 4 und 6 eingezogen und aufgrund der Friktion, der besonderen Walzenoberfläche und des einstellbaren Abstandes zwischen den Walzen 4 und 6 auf die gewünschte Korngrösse zerkleinert.

Zur Herstellung von hochverdichteten Briketts werden anstelle einer Schülpe die vorgeformten Briketts nach der ersten Entspannung nochmals verpresst Die Presswalzen 4, 5 und 6 laufen jetzt mit gleicher Drehzahl synchron, d.h. es wird keine Friktion eingestellt. Aufgrund der schrägen Anordnung des Presswalzenpaares 4, 5 wird das Brikett automatisch von dem sich ergebenden zweiten Walzenpaar 4, 6 eingezogen. Aufgrund der vorherrschenden Presskraft zwischen den beiden Walzen 4, 6 wird ein zweites Mal mit noch höherer Kraft als beim Vorpressen gepresst. Da die Walze 6 wie die Walze 5 in einer Schwinge beweglich gelagert ist, lässt sich eine höhere Verdichtung auch dadurch erreichen, dass der Walzenspalt zwischen dem Walzenpaar 4 und 6 kleiner eingestellt wird als bei der Vorpressung zwischen dem Walzenpaar 4 und 5. Zusätzlich zu dieser Option wird auch die Walze 6, gleich der beweglichen Presswalze, mit beispielsweise hydraulischer Kraft beaufschlagt.

Die Walzenoberflächen sind mit Einfräsungen versehen, die quer über die Walze verlaufen. Diese sind für die Paarung der Walzen, die die Zerkleinerung darstellen, in einem Winkel von 15 Grad eingefräst, der je nach Produktbeschaffenheit und Mahlergebnis variiert werden kann.

Bei der Walze 6 hat sich gezeigt, dass die besten Ergebnisse in Bezug auf Ausbeute an Granulat dann erreicht werden, wenn die Einfräsung doppelt vorgenommen wird, und zwar einmal im positiven Winkel und einmal im negativen Winkel. Bei entsprechender Teilung der Einfräsungen am Umfang der Mahlwalze 6 entstehen einzelne Zähne, deren Selbstreinigungseffekt besonders ausgeprägt ist.

Die Form der derart schräg über die Walzen verlaufenden Einfräsung weist ebenfalls eine besondere Form auf, die der eines Sägeblattes ähnlich sieht, d.h. es existiert eine Schnittkante, die einen wesentlich steileren Winkel zur Achsmitte aufweist als die Schulter, die wesentlich flacher ausgebildet ist.

Durch die einfache Ausführung der auswechselbaren Pressringe ist es wirtschaftlich, Ausführungen mit unterschiedlichen Winkeln für unterschiedliche Produktarten einzusetzen, weil dadurch die Ausbeute optimiert werden kann.

Mit der erfindungsgemässen Vorrichtung ist es möglich, alle obengenannten Produkte unabhängig von ihrer Konsistenz gleichmässig in die gewünschte Form überzuführen, ohne dass dadurch zusätzliche Arbeitsschritte wie Mahlen und Aussieben und damit verbunden unerwünschte Feinanteile als Abfall entstehen. Ebenfalls ist es möglich, umweltschonend zu arbeiten.

Mit der erfindungsgemässen Vorrichtung und aufgrund der besonderen Anordnung ist es erstmals möglich, Briketts besonders hoher Dichte zu pressen.

## Patentansprüche

1. Vorrichtung zum kontinuierlichen, mechanischen Umformen von teilchenförmigen Stoffen mittels eines Presswalzenpaares (4,5) innerhalb eines geschlossenen Raumes, dadurch gekennzeichnet, dass unterhalb des Presswalzenpaares (4,5) eine dritte Walze (6) angeordnet ist, und das Presswalzenpaar (4,5) und die Walze (6) senkrecht zur Rotationsachse miteinander und/oder gegeneinander verschiebbar angeordnet sind.

2. Vorrichtung nach Anspruch 1, dadurch gekennzeichnet, dass das Presswalzenpaar (4,5) in einem Winkel von grösser als 0 und kleiner als 90 Grad aus der Horizontalen kippbar angeordnet ist.

3. Vorrichtung nach Anspruch 1, dadurch gekennzeichnet, dass das Presswalzenpaar (4,5) und die Walze (6) mit einer aufsteckbaren Kühl- oder Heizeinrichtung versehen sind.

4. Vorrichtung nach Anspruch 1, dadurch gekennzeichnet, dass die Oberfläche der Walze (6) mit parallel angeordneten Einfräsungen (26) versehen sind , welche zur Rotationsachse in einem Winkel von grösser als 0 Grad und kleiner als 90 Grad verlaufen. (Fig. 3 A).

5. Vorrichtung nach Anspruch 4, dadurch gekennzeichnet, dass die Einfräsungen (26') in einem Winkel von grösser als 0 Grad und kleiner als 90 Grad sich kreuzend angeordnet sind. (Fig. 3 B).

6. Vorrichtung nach Anspruch 4, dadurch gekennzeichnet, dass die Einfräsungen (26,26') unterschiedliche Tiefe und Flankenwinkel aufweisen.

7. Vorrichtung nach Anspruch 1, dadurch gekennzeichnet, dass ein mit Stellschrauben (23) stufenlos gegen die Walzenoberfläche (22) einstellbarer Abstreifer (20) vorgesehen ist.

## Claims

1. A device for continuous mechanical shaping of a particulate material comprising a pressing roll pair (4,5) forming a pressing space, wherein a third roll (6) is arranged below said press roll pair (4,5), and said press roll pair (4,5) and said roll (6) is displacable perpendicular to the axis of rotation together and/or relative to one another.

2. A device as defined in claim 1, wherein said pressing roll pair (4,5) is tiltable from a horizontal at an angle more than 0 degree and less than 90 degrees.

3. A device as defined in claim 1, wherein said pressing roll pair (4,5) and said roll (6) are provided with an attachable cooling- and heating device.

4. A device as defined in claim 1, wherein said roll (6) has milled grooves (26) arranged so as to be parallel and extend relative to the axis of rotation at an angle of greater than 0 degree and less than 90 degrees. (Fig. 3 A).

5. A device as defined in claim 4, wherein said milled grooves (26') are arranged so as to intersect at an angle of greater than 0 degree and loss than 90 degrees. (Fig. 3 B).

6. A device as defined in claim 4, wherein said milled grooves (26,26') have different depths and flank angles.

7. A device as defined in claim 1, wherein a stripper (20) is adjustable in a continuous manner by means of adjusting screws (23) relative to the roller surface (22).

## Revendications

1. Dispositif pour le formage mécanique en continu de substances sous forme de particules au moyen d'une paire de rouleaux comprimeurs (4,5), à l'intérieur d'un espace fermé, caractérisé en ce que en dessous de la paire de rouleaux comprimeurs (4,5) est disposée un troisième rouleau (6), et la paire de rouleaux comprimeurs (4,5) et le rouleau (6) vertical par rapport à l'axe de rotation sont disposés de telle manière qu'ils peuvent coulissés ensemble et/ou contre sens.

2. Dispositif selon la revendication 1, caractérisé en ce que la paire de rouleaux comprimeurs (4,5) est disposée dans un angle supérieur à 0 et inférieur à 90 degrés basculant de l'horizontale.

3. Dispositif selon la revendication 1, caractérisé en ce que la paire de rouleaux comprimeurs (4,5) et le rouleau (6) sont dotés d'une installation de chauffage ou de refroidissement connecté par couplage.

4. Dispositif selon la revendication 1, caractérisé en ce que la surface du rouleau (6) est dotée de gravures disposées en parallèles (26), lesquelles marchent par rapport à l'axe de rotation avec un angle supérieure à 0 degré et inférieur à 90 degrés (Fig. 3A).

5. Dispositif selon la revendication 4, caractérisé en ce que les gravures (26') se croisent avec un angle supérieur à 0 degré et inférieur à 90 degrés (Fig. 3B).

6. Dispositif selon la revendication 4, caractérisé en ce que les gravures (26,26') ont une profondeur différentes et des angles de flanc différents.

7. Dispositif selon la revendication 1, caractérisé en ce que des vis ajustables (23) avec un réglage indéterminé sont prévus pour un grattoir pouvant être positionné contre la surface du rouleau (22).
